(19) Europäisches Patentamt
European Patent Office
Office européen des brevets

(11) EP 0 770 221 B1

(12) FASCICULE DE BREVET EUROPEEN

(45) Date de publication et mention de la délivrance du brevet:
**22.04.1998 Bulletin 1998/17**

(21) Numéro de dépôt: **95923413.9**

(22) Date de dépôt: **20.06.1995**

(51) Int Cl.$^6$: **G02B 1/10**, C08J 7/04, G02B 1/04

(86) Numéro de dépôt international:
**PCT/FR95/00812**

(87) Numéro de publication internationale:
**WO 96/00403 (04.01.1996 Gazette 1996/02)**

# (54) LENTILLE OPHTALMIQUE EN VERRE ORGANIQUE A INTERCOUCHE ANTI-CHOCS ET SON PROCEDE DE FABRICATION

AUGENKORREKTURLINSE AUS ORGANISCHEM GLAS MIT STOSSGESCHÜTZTER ZWISCHENSCHICHT SOWIE VERFAHREN ZU IHRER HERSTELLUNG

OPHTHALMIC LENS MADE OF ORGANIC GLASS WITH A SHOCKPROOF INTERMEDIATE LAYER, AND METHOD FOR MAKING SAME

(84) Etats contractants désignés:
**DE ES GB IT**

(30) Priorité: **27.06.1994 FR 9407877**

(43) Date de publication de la demande:
**02.05.1997 Bulletin 1997/18**

(73) Titulaire: **ESSILOR INTERNATIONAL (COMPAGNIE GENERALE D'OPTIQUE)**
**F-94227 Charenton cédex (FR)**

(72) Inventeurs:
- **CANO, Jean-Paul**
  **F-94430 Chennevières (FR)**
- **LECLAIRE, Yves**
  **F-77380 Combe-la-Ville (FR)**
- **ROBERT, Anne**
  **F-94000 Créteil (FR)**

(74) Mandataire: **Casalonga, Axel**
**BUREAU D.A. CASALONGA - JOSSE**
**Morassistrasse 8**
**80469 München (DE)**

(56) Documents cités:
**EP-A- 0 390 218**
**EP-A- 0 404 111**
**EP-A- 0 500 346**
**US-A- 4 732 454**

- **PATENT ABSTRACTS OF JAPAN vol. 13, no. 527 (P-965) 24 Novembre 1989 & JP,A,01 216 301 (SEIKO EPSON CORP.) 30 Août 1989**
- **PATENT ABSTRACTS OF JAPAN vol. 13, no. 146 (P-854) 11 Avril 1989 & JP,A,63 309 901 (NIKON CORPORATION) 19 Décembre 1988**
- **DATABASE WPI Derwent Publications Ltd., London, GB; AN 85-307423 & JP,A,60 214 302 (SUWA SEIKOSHA KK) , 26 Octobre 1985**
- **DATABASE WPI Derwent Publications Ltd., London, GB; AN 88-202501 & JP,A,63 141 001 (HOYA CORP.) , 13 Juin 1988**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 770 221 B1

## Description

La présente invention concerne une lentille ophtalmique en verre organique à intercouche anti-chocs et son procédé de fabrication.

Les lentilles ophtalmiques en verre organique sont plus sensibles à la rayure et à l'abrasion que celles en verre minéral.

Il est connu de protéger en surface ce type de lentille par des revêtements durs généralement du type polysiloxane.

Il est également connu de traiter les lentilles en verre organique de façon à empêcher la formation de reflets parasites gênants pour le porteur de la lentille et ses interlocuteurs. La lentille comporte alors un revêtement anti-reflets mono ou multicouche en matière minérale.

Lorsque la lentille comporte dans sa structure un revêtement anti-abrasion, le revêtement anti-reflets est déposé sur la surface de la couche anti-abrasion. Un tel empilement diminue la résistance aux chocs, en rigidifiant le système qui devient cassant. Ce problème est bien connu dans l'industrie des lentilles ophtalmiques en verre organique.

Plusieurs solutions ont été proposées dans l'état de la technique. Elles consistent en général à appliquer un primaire anti-chocs sur le substrat de la lentille, puis à appliquer le revêtement dur anti-abrasion et enfin le revêtement anti-reflets.

Les brevets japonais 63-141001 et 63-87223 décrivent des lentilles plastiques comportant un primaire anti-chocs à base de résine polyuréthane thermoplastique. Le brevet US 5015523 préconise des primaires anti-chocs acryliques et la demande EP-0404111 décrit des primaires anti-chocs à base de polyuréthane thermodurcissable.

Les procédés de l'art antérieur définis ci-dessus ont pour inconvénients d'utiliser des primaires anti-chocs d'épaisseur élevée et d'être peu adaptés aux problèmes de mise en oeuvre de ces revêtements à l'échelle industrielle.

Dans la réalité industrielle de la fabrication des lentilles ophtalmiques en verre organique, les verres sont généralement revêtus d'une couche dure anti-abrasion, mais le traitement anti-reflets n'est pas systématique et s'effectue, sur commande, sur des verres de stocks en nombre limité.

Les procédés de fabrication des lentilles résistantes à l'abrasion et anti-reflets de l'art antérieur, utilisent une collection de verres de stocks comportant non seulement un revêtement dur anti-abrasion, mais également un primaire anti-chocs, alors qu'une partie seulement de ces verres doit être traitée en anti-reflets.

Ces techniques ont pour conséquence une multiplicité d'opérations parfois inutiles associée à des surcoûts de production du verre final.

Il serait souhaitable, sur le plan industriel, de rechercher un procédé de fabrication de lentilles ophtalmiques résistantes à l'abrasion et anti-reflets permettant d'utiliser à la demande des verres de stocks uniquement revêtus d'une couche anti-abrasion pour être traités ensuite par une revêtement anti-reflets.

La demanderesse vient de découvrir, d'une façon inattendue, qu'il était possible d'intercaler un primaire anti-chocs entre le revêtement dur et l'anti-reflets sans modifier la fonction de ce primaire, pour obtenir une lentille ophtalmique suffisamment résistante à l'abrasion et aux chocs et ayant des propriétés anti-reflets satisfaisantes.

La demanderesse a découvert qu'il était possible dans ces conditions, d'utiliser la couche primaire à des épaisseurs sensiblement plus faibles que dans l'art antérieur.

L'empilement des couches anti-abrasion, de primaire anti-chocs et d'anti-reflets conforme à la présente invention, permet de réaliser, à la demande, des lentilles ophtalmiques, sur le plan industriel, à des coûts de production sensiblement réduits, à partir de verres de stocks traités uniquement par un revêtement anti-abrasion.

La présente invention a donc pour objet une lentille ophtalmique en verre organique à primaire anti-chocs intercalé entre une couche anti-abrasion et un revêtement anti-reflets.

Un autre objet de l'invention concerne un procédé de fabrication de cette lentille.

D'autres objets apparaîtront à la lumière de la description.

La lentille ophtalmique conforme à la présente invention constituée d'un substrat en verre organique, d'un revêtement dur anti-abrasion, d'un primaire anti-chocs et d'un revêtement anti-reflets, est caractérisée essentiellement par le fait que la surface du substrat est recouverte de la couche dure anti-abrasion et que la couche de primaire anti-chocs est intercalée entre ladite couche anti-abrasion et le revêtement anti-reflets.

Les substrats des lentilles conformes à la présente invention sont des substrats en verre organique couramment utilisés pour les lentilles ophtalmiques organiques.

On peut citer, de façon préférentielle :

(1) les substrats obtenus par polymérisation du bis(allylcarbonate) du diéthylèneglycol, vendu sous la dénomination commerciale CR-39 allyldiglycolcarbonate par la Société PPG INDUSTRIES INC (lentilles ORMA® d'ESSILOR);

(2) les verres obtenus par polymérisation de monomères acryliques dérivés du bisphénol A, en particulier ceux obtenus par polymérisation d'une composition contenant :

(A) un composant (A) comprenant : au moins 50% en poids d'un monomère ou d'un mélange de monomères,

répondant à la formule (I) :

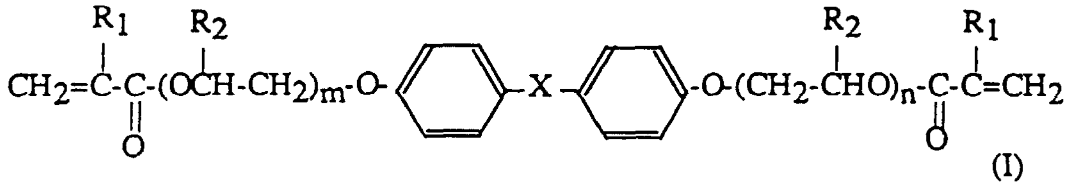

(I)

dans laquelle $R_1$ et $R_2$, identiques ou différents, désignent hydrogène ou alkyle en $C_1$-$C_6$; X désigne

$O, S, SO_2, -CO-, -CH_2-, -CH=CH-$ ou 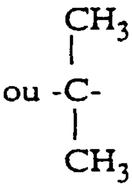

m + n sont compris entre 0 et 10

- 0 à 50% en poids d'un ou -plusieurs comonomères vinylique(s), acrylique(s) ou méthacrylique(s), mono- ou polyfonctionnel(s) (II);

(B) un composant (B) présent dans des proportions de

- 0,5 à 15% en poids, de préférence 1 à 5% en poids par rapport au poids des composants I + II, comprenant un composé de formule (III) :

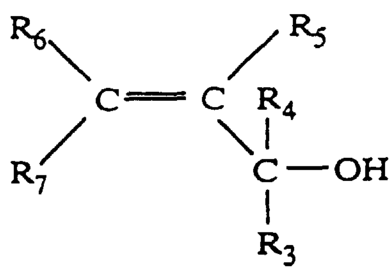

(III)

dans laquelle :

$R_3$ et $R_4$ désignent hydrogène, ou bien l'un des radicaux $R_3$ ou $R_4$ est un atome d'hydrogène, tandis que l'autre forme un cycle avec $R_7$ ayant 5 à 10 atomes de carbone éventuellement substitué par un ou plusieurs groupement(s) alkyle en $C_1$-$C_4$, linéaire(s) ou ramifié(s);
$R_5$, $R_6$ et $R_7$ sont choisis, indépendamment l'un de l'autre, parmi l'atome d'hydrogène, les groupements alkyle en $C_1$-$C_6$ pouvant être substitué(s) par un ou plusieurs groupement(s) OH et dont la chaîne peut éventuellement être interrompue par un ou plusieurs groupement(s) éther, ester ou cétonique, $R_7$ pouvant former un cycle en $C_5$-$C_{10}$, éventuellement substitué par un ou plusieurs groupement(s) alkyle en $C_1$-$C_4$, linéaire(s) ou ramifié(s), avec l'un des radicaux $R_3$ ou $R_4$.

(3) les verres obtenus par polymérisation de monomères allyliques dérivés du bisphénol A tels que ceux décrits dans le brevet US-4.959.429, et plus particulièrement ceux obtenus par polymérisation d'une composition contenant :

(A) un composant (A) comprenant : au moins 50% en poids d'un monomère ou d'un mélange de monomères, répondant à la formule (1) :

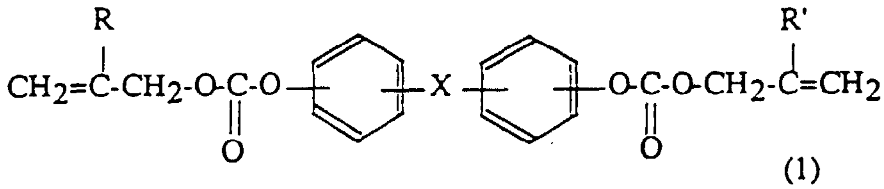

(1)

dans laquelle :

X désigne

$O, S, SO_2, -CO-, -CH_2-, -CH=CH-$ ou 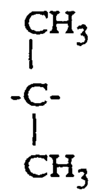

et R et R' sont choisis parmi H et $CH_3$;

0 à 50% en poids d'un ou plusieurs comonomère(s) allylique(s) vinylique(s), acrylique(s) ou méthacrylique(s) mono- ou polyfonctionnel(s) (2);

(B) un composant (B) comprenant de
0,2 à 10% en poids, de préférence 0,3 à 5% en poids par rapport au poids des composants (1) et (2), d'un composé de formule (3) :

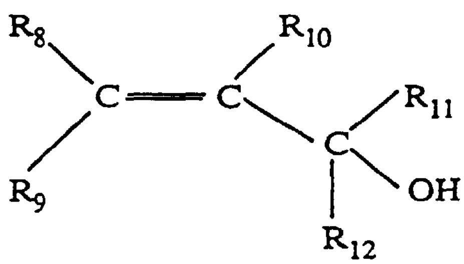

(3)

dans laquelle :

$R_{11}$ et $R_{12}$ désignent hydrogène, ou bien l'un des radicaux
$R_{11}$ ou $R_{12}$ est un atome d'hydrogène, tandis que l'autre forme un cycle avec $R_9$ en $C_5$ ou $C_7$-$C_{10}$, éventuellement substitué par un ou plusieurs groupement(s) alkyle en $C_1$-$C_4$, linéaire(s) ou ramifié(s);
$R_8$, $R_9$ et $R_{10}$ sont choisis, indépendamment l'un de l'autre, parmi l'atome d'hydrogène, les groupements alkyle en $C_1$-$C_6$ pouvant être substitués par un ou plusieurs groupement(s) OH et dont la chaîne peut éventuellement être interrompue par un ou plusieurs groupement(s) éther, ester ou cétonique; $R_9$ pouvant former un cycle en $C_5$ ou en $C_7$-$C_{10}$, éventuellement substitué par un ou plusieurs groupement(s) alkyle linéaire(s) ou ramifié(s) avec l'un des groupements $R_{11}$ ou $R_{12}$.

On peut citer comme autres exemples de substrats utilisables selon l'invention :
(4) les substrats obtenus à partir de poly(méthylméthacrylate);
(5) les substrats obtenus à partir de résine polystyrène;
(6) les substrats obtenus à partir de résine à base de diallylphtalate;

La composition de l'intercouche anti-chocs conforme à la présente invention, est une composition polymérique

thermoplastique ou thermodurcissable.

Il est souhaitable, pour obtenir une résistance aux chocs satisfaisante, que la couche primaire anti-chocs possède une valeur de BAYER intrinsèque, inférieure ou égale à 2, et comprise de préférence entre 1 et 2.

On entend par valeur de BAYER intrinsèque, la résistance à l'abrasion de l'intercouche anti-chocs, déterminée selon le test BAYER conformément à la norme ASTM F735.81 adaptée comme décrit ci-après. La mesure est effectuée de manière séparée sur une couche d'une épaisseur de l'ordre de 3 µm sur un substrat organique tel que CR 39.

La demanderesse a constaté qu'à des épaisseurs faibles, inférieures à 1 µm pour l'intercouche anti-chocs, la résistance à l'abrasion était essentiellement déterminée par le revêtement dur sur lequel est appliquée cette intercouche.

Il est donc possible, selon cette invention, d'obtenir un article final présentant une résistance à l'abrasion satisfaisante bien que la résistance à l'abrasion intrinsèque de l'intercouche anti-chocs déposée sur le vernis dur, soit faible.

Selon la présente invention, l'épaisseur du revêtement primaire anti-chocs, obtenue après durcissement, est de préférence comprise entre 0,2 et 1 µm et plus particulièrement entre 0,4 et 0,8 µm.

L'extrait sec de la composition de primaire anti-chocs, thermoplastique ou thermodurcissable, est de préférence compris entre 5 et 20% en poids et plus particulièrement entre 10 et 15% en poids par rapport au poids total de la composition.

La composition du primaire anti-chocs, conforme à la présente invention, peut être constituée d'une résine polyuréthane thermoplastique obtenue par réaction d'un diisocyanate avec un composé comportant un hydrogène réactif à chaque extrémité.

Ce composé, contenant un hydrogène actif, peut être du type alkylèneglycol tel qu'éthyléneglycol, 1,2-propylèneglycol, 1,3-butane diol, 1,4-butanediol, 1,6-hexanediol, néopentylglycol, dipropylène glycol ou diéthylèneglycol; du type polyalkylèneglycol tel que polypropylèneglycol, polyéthylèneglycol ou polytétraméthylèneglycol; du type poly(alkylène adipate) tel que poly(diéthylène adipate), poly(tétraméthylène adipate), poly(hexaméthylène adipate) ou poly(néopentylène adipate); un poly-ε-caprolactone; du type polybutadiène glycol tel que poly(l,4-butadiène)glycol ou poly(1,2-butadiène)glycol; du type (alkylène carbonate) tel que poly(hexaméthylène carbonate); un polyol siliconé; ou un autre composé connu comportant un hydrogène actif.

Comme exemple de diisocyanate, on peut citer un diisocyanate aromatique tel que tolylène diisocyanate, xylylène diisocyanate, 4,4'-diphénylméthane diisocyanate, 1,5-naphtalène diisocyanate, ou 3,3'-dirnéthyl-4,4'-diphényl diisocyanate; ou encore un diisocyanate aliphatique tel que 1,6-hexaméthylène diisocyante, isophorone diisocyanate, 4,4'-dicyclohexylméthane diisocyanate, 1,3-bis(isocyanatométhyl)cyclohexane ou triméthylhexaméthylène diisocyanate.

La résine polyuréthane thermoplastique peut être obtenue par des procédés connus, en utilisant comme catalyseurs des composés métalliques.

Pour constituer la composition primaire, la solution de résine polyuréthane thermoplastique est diluée à une concentration adaptée à l'application. Pour diluer, on peut utiliser comme solvant un hydrocarbure, un hydrocarbure halogéné, un alcool, une cétone, un ester, un éther ou un autre solvant connu. Il est particulièrement souhaitable d'utiliser du toluène, de l'acétate d'éthyle, de la méthyléthylcétone ou du tétrahydrofurane, séparément ou en mélange. Il est en outre possible d'ajouter divers additifs connus destinés à améliorer les performances ou les fonctions, comme par exemple des agents d'égalisation pour faciliter l'application, des absorbeurs d'UV et des antioxydants pour augmenter la résistance aux agents atmosphériques, des colorants ...

La couche primaire à base de résine polyuréthane thermoplastique peut être appliquée par centrifugation, au trempé ou par pulvérisation.

Après l'avoir appliquée sur la couche dure anti-abrasion, la composition primaire peut être séchée à une température comprise entre 30 et 200°C, de préférence entre 60 et 150°C et de préférence pendant 1 à 60 minutes, selon le solvant utilisé.

La composition primaire anti-chocs de l'invention peut être constituée d'un polyisocyanate bloqué et d'un polyol. Le mélange est réticulé par chauffage pour former un primaire. Il s'agit d'un polyuréthane thermodurcissable.

Les polyisocyanates bloqués sont choisis parmi les produits d'addition obtenus par liaison de deux molécules ou plus, d'hexaméthylène diisocyanate, d'isophorone diisocyanate, de 4,4'-dicyclohexylméthane diisocyanate, de xylène diisocyanate hydrogéné et d'isocyanurates, d'allophanates, de biurets et de carbodiimides qui sont bloqués par l'acide acétoacétique, l'acide malonique ou des oximes. Les polyisocyanates bloqués préférentiels contiennent l'hexaméthylène diisocyanate bloqué par une oxime.

Les polyols sont choisis parmi les composés ayant une pluralité de groupes hydroxyle par molécule et un squelette de polyester, polyéther, polycaprolactone, polycarbonate ou polyacrylate.

Le rapport molaire polyisocyanate/polyol est de préférence tel que le rapport molaire des groupes isocyanates sur les groupes hydroxyle soit compris entre 0,8 et 1,25.

Un amorceur de réticulation peut être utilisé dans la réaction du polyisocyanate bloqué avec le polyol. Des exemples préférentiels d'amorceurs sont les amines tertiaires, les composés organiques à base d'étain ou de zinc.

La composition primaire est diluée à une concentration adaptée à l'application. On utilise comme solvant par

exemple des alcools, des cétones ou des esters. L'alcool diacétone, l'acétate d'éthyle et la méthyléthylcétone sont particulièrement préférés. Les solvants peuvent être utilisés seuls ou en mélanges. Il est en outre possible d'ajouter divers additifs connus tels que ceux cités précédemment.

Le primaire est appliqué selon les procédés de revêtement classiques tels que la centrifugation, le trempé ou la pulvérisation. Il est formé sur la couche dure anti-abrasion, par séchage, si nécessaire, et chauffage à une température comprise entre 100 et 140°C; la durée de réticulation varie de préférence entre 15 et 90 minutes.

La composition primaire selon l'invention peut également être constituée de copolymères, de monomères acryliques et/ou méthacryliques et de composés vinyliques aromatiques. Des exemples de monomères acryliques et méthacryliques sont les esters d'acide acrylique ou méthacrylique avec des alcools inférieurs, les esters formés à partir de l'acide acrylique ou méthacrylique et des composés aromatiques hydroxylés tels que des benzylalcools. Parmi les composés vinyliques, on peut citer le styrène, le chlorostyrène, le bromostyrène. De telles compositions primaires sont décrites dans le brevet US-5.015.523.

Elles sont appliquées selon les méthodes classiques de revêtement sur la couche dure anti-abrasion de la lentille. Le primaire anti-choc est formé par séchage et réticulation à une température comprise entre la température ambiante et 100°C pendant, de préférence, 5 minutes à 2 heures.

Une forme particulièrement préférée de l'invention consiste à utiliser une composition primaire anti-chocs à base de polysiloxane.

On utilise de façon préférentielle des compositions contenant dans un milieu solvant un ou plusieurs hydrolysat (s) de silane et qui ne renferment pas de charges telles que la silice ($SiO_2$). On préfère utiliser des hydrolysats de silane à groupements époxy renfermant au moins un groupement Si-alkyle, comme par exemple le glycidoxypropylméthyldiéthoxysilane.

Le revêtement dur anti-abrasion utilisé selon la présente invention, est obtenu par durcissement d'une composition contenant :

A/ de la silice colloïdale ayant un diamètre moyen de particule de 1 à 100 nm;
B/ un solvant;
C/ un hydrolysat ou un mélange d'hydrolysats de composé(s) silane(s);
de formule :

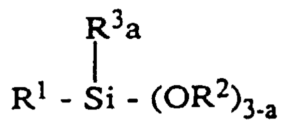

(α)

dans laquelle :

$R^1$ désigne un groupement organique contenant un groupe époxy;
$R^2$ est un radical hydrocarboné ayant 0 ou 1 atome de carbone;
$R_3$ est un groupe hydrocarboné ayant de 1 à 4 atomes de carbone; et
a vaut 0 ou 1.

La structure de la silice est de préférence $SiO_2$. La silice colloïdale est obtenue par dispersion macromoléculaire de silice anhydre dans un milieu dispersant. Ce milieu dispersant peut être de l'eau, un alcool, un cellosolve, une cétone, un ester, un carbitol ou similaire, ou leurs mélanges.

Les composés silanes plus particulièrement préférés contiennent un groupe époxy de formule :

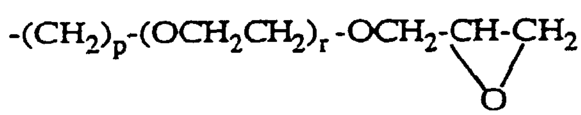

ou

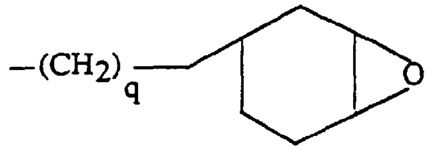

où p et q sont 1 à 6 et r est 0 à 2.

Parmi les exemples de composés silanes hydrolysés conformes à l'invention, on peut citer :

- le $\gamma$-glycidoxypropyltriméthoxysilane,
- le $\gamma$-glycidoxypropyltriéthoxysilane,
- le $\gamma$-glycidoxypropyl(méthyl)diméthoxysilane,
- le $\gamma$-glycidoxypropyl(méthyl)diéthoxysilane,
- le $\beta$-(3,4-époxycyclohexyl)éthyltriméthoxysilane,

ou similaire.

Les compositions de revêtement dur anti-abrasion contiennent de préférence des additifs pour prolonger la durée de stockage, tels que des agents chelatants de $\beta$-dicétones, de $\beta$-cétocsters ou leurs mélanges.

On peut citer, par exemple, l'acétylacétone, l'acétoacétate d'éthyle ou similaire.

Les hydrolysats des composés silanes de formule ($\alpha$) sont obtenus par hydrolyse dans le milieu de dispersion de la silice colloïdale.

L'hydrolyse s'effectue par addition d'eau et d'un catalyseur acide tel que l'acide chlorhydrique, sulfurique, nitrique, phosphorique ou acétique.

Des catalyseurs de réticulation peuvent être introduits dans ces compositions pour diminuer la température de durcissement et sa durée. On peut citer les acides de Bronsted tels que l'acide chlorhydrique, l'acide sulfurique et l'acide nitrique; les acides de Lewis tels que le chlorure d'aluminium, le chlorure d'étain, le borofluorure de zinc, le fluorure de bore, les composés acides halogénures, les composés chelatés de l'acétylacétone et de l'acétoacétate, les composés carboxyliques de magnésium, titane, zirconium et étain, les perchlorates de sodium, magnésium, cuivre, zinc, hydrogène, lithium.

Les compositions de revêtement dur peuvent en outre contenir des additifs tels que des absorbeurs d'ultra-violets, des tensio-actifs siliconés ou fluorés, des colorants, des pigments, des ajusteurs d'indice de réfraction.

Les méthodes d'application de la couche anti-abrasion sur le substrat de la lentille sont identiques à celles du primaire anti-chocs, telles qu'évoquées précédemment.

Le durcissement de la couche anti-abrasion est mis en oeuvre de façon préférentielle à une température de 80 à 150°C pendant 30 minutes à 2 h 30.

Après durcissement, l'épaisseur de la couche anti-abrasion, déposée sur la surface du substrat, est de préférence choisie entre 1 et 15 µm et plus particulièrement entre 2 et 6 µm.

Après durcissement du primaire anti-chocs sur la couche anti-abrasion, selon l'invention, un revêtement anti-reflets est formé en surface du primaire anti-chocs.

Le revêtement anti-reflets est constitué d'un film mono- ou multicouche, de matériaux diélectriques tels que SiO, $SiO_2$, $Si_3N_4$, $TiO_2$, $ZrO_2$, $Al_2O_3$, $MgF_2$ ou $Ta_2O_5$, ou leurs mélanges. Il devient ainsi possible d'empêcher l'apparition d'une réflexion à l'interface lentille-air.

Le revêtement anti-reflets est appliqué en particulier par dépôt sous vide selon l'une des techniques suivantes :

1/ Par évaporation, éventuellement assistée par faisceau ionique.
2/ Par pulvérisation par faisceau d'ions.
3/ Par pulvérisation cathodique.
4/ Par dépôt chimique en phase vapeur assisté par plasma.

Outre le dépôt sous vide, on peut aussi envisager un dépôt d'une couche minérale par voie sol gel (par exemple à partir d'hydrolysats de tétraéthoxysilane).

Dans le cas où la pellicule comprend une seule couche, son épaisseur optique doit être égale à $\lambda/4$ où $\lambda$ est une longueur d'onde comprise entre 450 et 650 nm.

Dans le cas d'un film multicouche comportant trois couches, on peut utiliser une combinaison correspondant à des épaisseurs optiques respectives $\lambda/4$-$\lambda/2$-$\lambda/4$ ou $\lambda/4$-$\lambda/4$-$\lambda/4$.

On peut en outre utiliser un film équivalent formé par plus de couches, à la place de l'une quelconque des couches

faisant partie des trois couches précitées.

Un autre objet de l'invention est un procédé de fabrication d'une lentille ophtalmique en verre organique tel que défini précédemment, qui consiste à appliquer dans une première étape sur la surface du substrat en verre organique, une couche anti-abrasion dure; puis à déposer sur la couche anti-abrasion une couche de primaire anti-chocs; enfin, à déposer sur le primaire anti-chocs un revêtement anti-reflets.

Selon un mode préférentiel de l'invention, les différentes couches de la lentille ophtalmique sont appliquées après un traitement spécifique d'activation de surface permettant une meilleure adhérence de la couche déposée ultérieurement.

Ce type de traitement est effectué en particulier :

- en surface de revêtement dur avant application de l'intercouche anti-chocs;
- en surface de l'intercouche anti-chocs avant application du vernis anti-reflets.

Les traitements d'activation de surface peuvent être chimiques ou physiques. On peut citer à titre d'exemples :

- une attaque chimique de quelques minutes (2 à 3 minutes) à des températures voisines de 50°C dans un bain de soude à 5% en présence d'agents tensio-actifs;
- un traitement plasma à l'oxygène;
- un traitement IPC (Ion Pre-Cleaning) qui est un bombardement ionique sous enceinte à vide.

Dans le cas d'un traitement d'activation de la couche dure anti-abrasion, selon le procédé de fabrication de lentilles de l'invention, on utilise de manière préférentielle, afin d'obtenir une meilleure résistance aux chocs, un vernis anti-abrasion possédant une teneur en silice colloïdale comprise entre 0 et 40% en poids dans l'extrait sec, de préférence entre 10 et 30% en poids.

Les exemples qui suivent servent à illustrer l'invention de façon plus détaillée, mais non limitative.

Pour l'appréciation des propriétés des verres revêtus obtenus dans les exemples, on a mesuré :

- la résistance à l'abrasion, par la valeur obtenue au test BAYER.

Le test BAYER consiste à soumettre une série de verres tests et témoins, à l'abrasion provoquée par du sable en mouvement.

L'appréciation du test se fait en mesurant comparativement la diffusion des verres tests et témoins avant et après abrasion.

On suit le protocole selon la norme ASTM F 735.81, adapté comme suit :

L'évaluation d'un produit se fait sur une série de verres afocaux de diamètre 65 mm et de rayon de courbure compris entre 80 mm et 125 mm.

Tout verre revêtu (verre test) est abrasé en même temps qu'un verre témoin (verre organique de type ORMA®).

On procède de la façon suivante :

1/ Les verres sont trempés dans un bécher d'alcool isopropylique puis essuyés à l'aide d'un chiffon propre.

2/ On immobilise le couple de verres (témoin/test) horizontalement sur le plateau BAYER.

On ajoute le sable.

On effectue 150 aller/retour.

Les verres sont ensuite retournés.

On effectue à nouveau 150 aller/retour.

3/ Le verre est ensuite lavé à l'eau, trempé dans un bécher d'alcool isopropylique puis essuyé à l'aide d'un chiffon propre.

4/ On mesure la diffusion des verres.

La résistance à l'abrasion est quantifiée par la valeur BAYER.

Si on note :

$$\text{Dtest} = \text{diffusion après abrasion du verre test} - \text{diffusion avant abrasion du verre test}$$

$$\text{Dtem} = \text{diffusion après abrasion du verre témoin} - \text{diffusion avant abrasion du verre témoin}$$

la valeur BAYER est R = Dtem/Dtest.

Une valeur élevée au test BAYER correspond à un degré élevé de résistance à l'abrasion.

La valeur BAYER d'un verre organique du type ORMA®, non revêtu, est égale à 1.

- la résistance aux chocs par le test de la chute de billes. On fait tomber des billes avec une énergie croissante au centre du verre revêtu jusqu'à l'étoilement ou la cassure de celui-ci. L'énergie minimale imposée hors de ce test est de 15,2 g.m (correspondant à la première hauteur de chute).

  On calcule ensuite l'énergie moyenne de rupture du verre revêtu.

- la résistance à l'abrasion par la valeur obtenue au test BAYER, intrinsèque, pour l'intercouche anti-chocs.

Celle-ci est mesurée, dans chaque exemple, sur une couche d'épaisseur 3 µm appliquée sur un verre du type ORMA®.

Les proportions, pourcentages et quantités mentionnés dans les exemples sont des proportions, pourcentages et quantités en poids.

<u>EXEMPLE 1</u>

(**1**) <u>Fabrication du vernis anti-abrasion déposé sur le substrat (vernis A)</u>

On mélange 299,1 g de γ-glycidyloxypropylméthyldiéthoxysilane (que l'on désignera par la suite méthyl GLYMO), 30 g d'éther diglycidique de l'hexanediol et 43,4 g de HCl 0,01 N. On agite ce mélange et on le chauffe pendant 5 heures à 45°C. On maintient l'agitation et on laisse le mélange refroidir à température ambiante pendant 24 heures.

On ajoute alors 200 g de silice colloïdale à 30% d'extrait sec dans le méthanol, vendue sous la dénomination SUN COLLOID MA-ST par la Société NISSAN; 22,45 g d'acétylacétonate d'aluminium, 55,3 g de méthyléthylcétone, 348,7 g de méthanol, 1 g de tensio-actif BAYSILONE OL31. On agite ce mélange et on le filtre.

(**2**) <u>Fabrication du primaire anti-chocs (couche B)</u>

On mélange 273,7 g de méthyl GLYMO, 48 g d'éther diglycidique de l'hexanediol, 39,7 g d'HCl 0,01 N. On agite ce mélange et on le chauffe pendant 5 heures à 45°C. On laisse ensuite refroidir le mélange pendant 24 heures. On ajoute ensuite 16,9 g d'acétyl acétonate d'aluminium, 50,7 g de méthyléthylcétone, 1 g de tensio-actif BAYSILONE OL31. On agite ce mélange et on le filtre.

On le dilue ensuite dans le méthanol jusqu'à un extrait sec de 10%. La valeur BAYER intrinsèque est de 1,4.

(**3**) <u>Procédé de fabrication des lentilles.</u>

On dépose le vernis A sur des verres en CR 39 (lentilles ORMA®) d'épaisseur au centre de 1 mm, ayant subi une préparation alcaline pour faciliter l'adhérence du vernis. L'épaisseur du vernis A déposé est de 2 µm; le vernissage étant réalisé au trempé.

Le vernis A est ensuite réticulé en étuve pendant 1 heure à 80°C. Après cette cuisson, le vernis subit une préparation alcaline pour favoriser l'adhérence du primaire anti-chocs B.

On dépose l'intercouche B au trempé. La vitesse de démouillage est de 10 cm/mn et l'épaisseur obtenue est de 0,7 µm.

On traite ensuite les verres à l'étuve pendant 3 heures à 100°C.

Après cuisson, les verres subissent un traitement anti-reflets par évaporation sous vide.

L'anti-reflets est obtenu par dépôt sous vide

- d'une première couche à base d'oxydes de zirconium et de titane;
- d'une deuxième couche à base de $SiO_2$;

  l'épaisseur optique pour ces deux couches prises globalement étant voisine de λ/4;

- d'une troisième couche à base de $TiO_2$, d'épaisseur optique λ/2;
- d'une quatrième couche à base de $SiO_2$, d'épaisseur optique λ/4.

Les résistances aux chocs sont déterminées par le test de chute de bille par l'énergie moyenne de rupture E des verres revêtus (exprimée en g.m).

On compare des verres traités anti-reflets, selon l'invention, à des verres traités anti-reflets ne comportant pas d'intercouche B.

On obtient les résultats suivants :

verre ORMA® + vernis A + anti-reflets : E < 15,2 g.m. (1ère hauteur du test)
verre ORMA® + vernis A + couche B + anti-reflets : E = 32 g.m.

EXEMPLE 2

(**1**) Vernis A anti-abrasion

Le vernis A est préparé de la même façon que dans l'exemple 1.

(**2**) Intercouche anti-chocs (couche C)

On mélange 5,4 g de polyéthylèneglycol 200, 7,06 g de 4,4'-dicyclohexylméthanediisocyanate, vendu sous le nom DW par SOLVAY, 78,7 g de dioxanne, 8,7 g de dibutyldilaurate d'étain et 0,11 g de tensio-actif BYK 300.

Après filtration de ce mélange, on le dilue à 4% d'extrait sec par du dioxanne. La valeur BAYER intrinsèque est de 1,1.

(**3**) Fabrication des lentilles

On dépose le vernis A sur des verres ORMA® de 1 mm d'épaisseur au centre, dans les mêmes conditions que dans l'exemple 1.

La couche C est déposée par centrifugation uniquement sur la face concave du verre; l'épaisseur est de 0,47 µm.

Les verres sont alors portés à l'étuve pendant 3 heures à 100°C.

Après cuisson, on dépose un traitement anti-reflets par dépôt sous vide, dans les mêmes conditions que l'exemple 1, puis on effectue le test de chute de bille.

On compare des verres recouverts de vernis A puis traités anti-reflets à des verres recouverts de vernis A, de la couche C et traités anti-reflets.

On mesure les énergies moyennes de rupture

verre ORMA® + vernis A + anti-reflets : E < 15,2 g.m. (1ère hauteur du test)
verre ORMA® + vernis A + couche C + anti-reflets : E = 44,7 g.m.

EXEMPLE 3

(**1**) Vernis anti-abrasion A'

On mélange :

341,9 g de méthyl GLYMO,
49,6 g d'HCl 0,01 N

On ajoute ce mélange en le chauffant pendant 5 heures à 45°C. On introduit ensuite 200 g de silice colloïdale MA-ST dans le méthanol.

On laisse refroidir à température ambiante pendant 24 heures.

On complète le vernis par addition de

21,1 g d'acétylacétonate d'aluminium,
63,2 g de méthyléthylcétone,
323,2 g de méthanol,
1 g de tensio-actif BAYSILONE OL-31.

On filtre ce vernis lorsque le mélange est bien homogène.

(**2**) Intercouche anti-chocs D

On mélange 113,05 g de glycidoxypropyltriméthoxysilane; 25,85 g d'HCl 0,01 N. La température monte jusqu'à 40°C lors de ce mélange.

On laisse reposer le vemis pendant 24 heures à température ambiante.

On ajoute alors :

18,17 g d'acide itaconique,
5,65 g de dicyandiamide,
0,8 g de tensio-actif FC-430.

On dilue ensuite jusqu'à 10% d'extrait sec par du méthanol.

La valeur BAYER intrinsèque est de 1,8.

(**3**) Fabrication des lentilles

On utilise le même procédé que dans l'exemple 1 pour déposer le vernis A' sur les verres ORMA.

L'épaisseur du vernis A' est de 2,3 µm.

L'intercouche D est déposée par "dip. coating" (trempé) avec une vitesse de démouillage de 11 cm/mn. L'épaisseur obtenue est de 0,67 µm.

Le système est réticulé en étuve pendant 3 heures à 100°C.

Si on effectue des tests de résistance à l'abrasion sur les verres ainsi réalisés, on obtient des propriétés satisfaisantes :

valeur BAYER = 1,93.

Si on dépose un traitement anti-reflets dans les conditions de l'exemple 1 et si l'on mesure l'énergie moyenne de rupture E, on obtient les résultats suivants :

verres ORMA® + vernis A' + anti-reflets : E < 15,2 g.m. (1ère hauteur du test)

verres ORMA® + vernis A' + D + anti-reflets : E = 20,3 g.m.

**Revendications**

1. Lentille ophtalmique constituée d'un substrat en verre organique, d'un revêtement anti-abrasion, d'une couche de primaire anti-chocs et d'un revêtement anti-reflets, caractérisée par le fait que la surface dudit substrat est recouverte par le revêtement anti-abrasion et que la couche de primaire anti-chocs est intercalée entre ladite couche anti-abrasion et le revêtement anti-reflets.

2. Lentille selon la revendication 1, caractérisée par le fait que le substrat est choisi parmi :

   (i) les verres obtenus par polymérisation du bis(allylcarbonate) du diéthylèneglycol;
   (ii) les verres obtenus par polymérisation de monomères acryliques dérivés du bisphénol A;
   (iii) les verres obtenus par polymérisation de monomères allyliques dérivés du bisphénol A.

3. Lentille selon la revendication 1, caractérisée par le fait que le substrat est choisi parmi :

   (a) les verres obtenus à partir de poly(méthylméthacrylate);
   (b) les verres obtenus à partir de résine polystyrène;
   (c) les verres en résine à base de diallylphtalate;

4. Lentille selon l'une quelconque des revendications 1 à 3, caractérisée par le fait que l'intercouche anti-chocs présente une valeur BAYER intrinsèque inférieure ou égale à 2, pour une épaisseur de 3 µm.

5. Lentille selon l'une quelconque des revendications 1 à 4, caractérisée par le fait que le primaire anti-chocs est une composition polymère, thermoplastique ou thermodurcissable, ayant un extrait sec compris entre 5 et 20% en poids par rapport au poids total de la composition du primaire.

6. Lentille selon l'une quelconque des revendications 1 à 5, caractérisée par le fait que l'épaisseur de l'intercouche anti-chocs à l'état durci est comprise entre 0,2 et 1 µm.

7. Lentille selon l'une quelconque des revendications 1 à 6, caractérisée par le fait que la composition du primaire anti-chocs est constituée d'une résine polyuréthane thermoplastique obtenue par réaction d'un diisocyanate avec un composé comportant un hydrogène réactif à chaque extrémité.

8. Lentille selon l'une quelconque des revendications 1 à 6, caractérisée par le fait que la composition du primaire anti-chocs est constituée d'une résine polyuréthane thermodurcissable obtenue par réaction d'un polyisocyanate bloqué et d'un polyol.

9. Lentille selon l'une quelconque des revendications 1 à 6, caractérisée par le fait que la composition du primaire anti-chocs est constituée d'un copolymère de monomères acryliques et/ou méthacryliques et de composés vinyliques aromatiques.

10. Lentille selon l'une quelconque des revendications 1 à 6, caractérisée par le fait que la composition du primaire

anti-chocs est constituée d'un polysiloxane.

**11.** Lentille selon la revendication 10, caractérisée par le fait que la composition du primaire anti-chocs contient dans un milieu solvant un ou plusieurs hydrolysat(s) de silane à groupement époxy renfermant au moins un groupement Si-alkyle et ne contenant pas de charges.

**12.** Lentille selon l'une quelconque des revendications 1 à 11, caractérisée par le fait que le revêtement dur anti-abrasion est obtenu par durcissement d'une composition contenant :

a) de la silice colloïdale ayant un diamètre moyen de particules compris entre 1 et 100 nm;
b) un solvant;
c) un hydrolysat ou un mélange d'hydrolysats de composé(s) silane de formule :

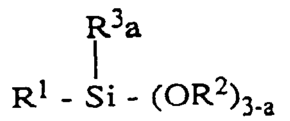

(α)

dans laquelle :

$R^1$ désigne un groupement organique contenant un groupe époxy;
$R^2$ est un radical hydrocarboné ayant 0 ou 1 atome de carbone;
$R^3$ est un groupe hydrocarboné ayant de 1 à 4 atomes de carbone; et
a vaut 0 ou 1.

**13.** Lentille selon l'une quelconque des revendications 1 à 12, caractérisée par le fait que l'épaisseur de la couche anti-abrasion, à l'état durci, est comprise entre 1 et 15 μm.

**14.** Lentille selon la revendication 12 ou 13, caractérisée par le fait que la composition du revêtement anti-abrasion présente une teneur en silice colloïdale comprise entre 0 et 40% en poids dans l'extrait sec.

**15.** Lentille selon l'une quelconque des revendications 1 à 14, caractérisée par le fait que le revêtement anti-reflets est constitué d'un film mono- ou multicouche à base de matériaux diélectriques, déposé par dépôt sous vide.

**16.** Lentille selon l'une quelconque des revendications 1 à 15, caractérisée par le fait qu'elle comprend successivement :

a) un substrat en verre obtenu par polymérisation du bis(allylcarbonate) du diéthylèneglycol;
b) un revêtement dur anti-abrasion obtenu par durcissement d'une composition contenant dans le méthanol de la silice colloïdale et un hydrolysat du γ-glycidyloxypropylméthyldiéthoxysilane;
c) une intercouche anti-chocs obtenue par durcissement d'une composition contenant dans le méthanol un hydrolysat du γ-glycidyloxypropylméthyldiéthoxysilane ou du γ-glycidoxypropyltriméthoxysilane;
d) un revêtement anti-reflets multicouches.

**17.** Lentille selon l'une quelconque des revendications 1 à 15, caractérisée par le fait qu'elle comprend successivement :

(a) un substrat en verre obtenu par polymérisation du bis(allylcarbonate) du diéthylèneglycol;
(b) un revêtement anti-abrasion obtenu par durcissement d'une composition contenant dans le méthanol de la silice colloïdale et un hydrolysat du γ-glycidyloxypropylméthyldiéthoxysilane;
(c) une intercouche anti-chocs obtenue par durcissement d'une composition contenant du 4,4'-dicyclohexylméthanediisocyanate et du polyéthylèneglycol;
(d) un revêtement anti-reflets multicouches.

**18.** Procédé de fabrication d'une lentille ophtalmique telle que définie selon l'une quelconque des revendications 1 à 17, caractérisé par le fait qu'on applique sur la surface du substrat en verre organique le revêtement anti-abrasion, que l'on dépose sur la couche anti-abrasion la couche de primaire anti-chocs, puis que l'on dépose sur le primaire

anti-chocs le revêtement anti-reflets.

**19.** Procédé selon la revendication 18, caractérisé par le fait que la couche anti-abrasion et la couche de primaire anti-chocs sont déposées par centrifugation, par trempé ou par pulvérisation et que l'anti-reflets est appliqué par dépôt sous vide.

**20.** Procédé selon la revendication 18 ou 19, caractérisé par le fait que les couches anti-abrasion et de primaire anti-chocs sont prétraitées par un traitement d'activation de surface par voie chimique ou physique.

**21.** Procédé selon la revendication 20, caractérisé par le fait que le traitement d'activation de surface est une attaque chimique alcaline, un traitement plasma à l'oxygène ou un bombardement ionique sous enceinte à vide.

**Patentansprüche**

**1.** Opthalmische Linse, gebildet aus einem Substrat aus organischem Glas, einem abriebfesten Überzug, einer Stoßschutzprimärschicht und einem Antireflexionsüberzug, dadurch gekennzeichnet, daß die Oberfläche des Substrats mit dem abriebfesten Überzug bedeckt ist und daß die Stoßschutzprimärschicht zwischen der abriebfesten Schicht und dem Antireflexionsüberzug zwischengelagert ist.

**2.** Linse nach Anspruch 1, dadurch gekennzeichnet, daß das Substrat gewählt ist aus:

(i) den Gläsern, welche durch Polymerisation des Diethylenglycol-bis(allylcarbonat) erhalten werden;
(ii) den Gläsern, welche durch Polymerisation von von Bisphenol-A abgeleiteten, acrylischen Monomeren erhalten werden;
(iii) den Gläsern, welche durch Polymerisation von von Bisphenol-A abgeleiteten, allylischen Monomeren erhalten werden.

**3.** Linse nach Anspruch 1, dadurch gekennzeichnet, daß das Substrat gewählt ist aus:

(a) den Gläsern, welche ausgehend von Poly(methylmethacrylat) erhalten werden;
(b) den Gläsern, welche ausgehend von Polystyrolharz erhalten werden;
(c) den Gläsern aus Harz auf Basis von Diallylphthalat.

**4.** Linse nach einem der Ansprüche 1 bis 3, dadurch gel<ennzeichnet, daß die Stoßschutzzwischenschicht einen intrinsischen BAYER-Wert unter oder gleich 2 für eine Dicke von 3 µm aufweist.

**5.** Linse nach einem der Ansprüche 1 bis 4, dadurch gekennzeichnet, daß die Stoßschutzprimärschicht eine polymere, thermoplastische oder durch Wärme härtbare Zusammensetzung ist, welche ein Trockengewicht zwischen 5 und 20 Gew.-% in bezug auf das Gesamtgewicht der Primärzusammensetzung aufweist.

**6.** Linse nach einem der Ansprüche 1 bis 5, dadurch gekennzeichnet, daß die Dicke der Stoßschutzzwischenschicht im gehärteten Zustand zwischen 0,2 und 1 µm liegt.

**7.** Linse nach einem der Ansprüche 1 bis 6, dadurch gekennzeichnet, daß die Stoßschutzprimärzusammensetzung aus einem thermoplastischen Polyurethanharz besteht, welches durch Reaktion eines Diisocyanats mit einer Verbindung, umfassend an jedem Ende einen reaktiven Wasserstoff, erhalten wurde.

**8.** Linse nach einem der Ansprüche 1 bis 6, dadurch gekennzeichnet, daß die Stoßschutzprimärzusammensetzung aus einem thermohärtbaren Polyurethanharz besteht, welches durch Reaktion eines blockierten Polyisocyanats und eines Polyols erhalten wird;

**9.** Linse nach einem der Ansprüche 1 bis 6, dadurch gekennzeichnet, daß die Stoßschutzprimärzusammensetzung aus einem Copolymer aus acrylischen und/oder methacrylischen Monomeren und aromatischen, vinylischen Verbindungen besteht.

**10.** Linse nach einem der Ansprüche 1 bis 6, dadurch gekennzeichnet, daß die Stoßschutzprimärzusammensetzung aus einem Polysiloxan besteht.

**11.** Linse nach Anspruch 10, dadurch gekennzeichnet, daß die Stoßschutzprimärzusammensetzung in einem Lösungsmittelmilieu ein oder mehrere Silanhydrolysat(e) mit einer Epoxygruppe enthält, welche mindestens eine Si-Alkylgruppe umfaßt und keine Ladungen enthält.

**12.** Linse nach einem der Ansprüche 1 bis 11, dadurch gekennzeichnet, daß der abriebfeste Überzug durch Härten einer Zusammensetzung erhalten ist, enthaltend:

a) kolloidales Siliciumdioxid mit einem mittleren Teilchendurchmesser zwischen 1 und 100 nm;
b) ein Lösungsmittel;
c) ein Hydrolysat oder eine Mischung von Hydrolysaten von (einer) Silanverbindung(en) der Formel

$$\begin{array}{c} R^3a \\ R^1 - \overset{|}{Si} - (OR^2)_{3-a} \end{array} \qquad (\alpha)$$

in welcher:

$R^1$ eine organische Gruppe, enthaltend eine Epoxygruppe, bezeichnet;
$R^2$ ein Kohlenwasserstoffrest mit 0 oder 1 Kohlenstoffatom ist;
$R^3$ eine Kohlenwasserstoffgruppe mit 1 bis 4 Kohlenstoffatomen ist; und
a 0 oder 1 bedeutet.

**13.** Linse nach einem der Ansprüche 1 bis 12, dadurch gekennzeichnet, daß die Dicke der abriebfesten Schicht in gehärtetem Zustand zwischen 1 und 15 µm liegt.

**14.** Linse nach Anspruch 12 oder 13, dadurch gekennzeichnet, daß die Zusammensetzung des abriebfesten Überzugs einen Gehalt an kolloidalem Siliciumdioxid zwischen 0 und 40 Gew.-% in trockenem Zustand aufweist.

**15.** Linse nach einem der Ansprüche 1 bis 14, dadurch gekennzeichnet, daß der Antireflexionsüberzug aus einem ein- oder mehrschichtigen Film auf Basis von dielektrischen, durch Vakuumabscheidung abgeschiedenen Materialien besteht.

**16.** Linse nach einem der Ansprüche 1 bis 15, dadurch gekennzeichnet, daß sie aufeinanderfolgend umfaßt:

a) ein Substrat aus Glas, erhalten durch Polymerisation von Diethylenglycol-bis(allylcarbonat);
b) einen harten, abriebfesten Überzug, erhalten durch Härten einer Zusammensetzung, enthaltend in Methanol kolloidales Siliciumdioxid und ein Hydrolysat von γ-Glycidyloxypropylmethyldiethoxysilan;
c) eine Stoßschutzzwischenschicht, erhalten durch Härten einer Zusammensetzung, enthaltend in Methanol ein Hydrolysat von γ-Glycidyloxypropylmethyldiethoxysilan oder von γ-Glycidoxypropyltrimethoxysilan;
d) einen mehrschichtigen Antireflexionsüberzug.

**17.** Linse nach einem der Ansprüche 1 bis 15, dadurch gekennzeichnet, daß sie aufeinanderfolgend umfaßt:

(a) ein Substrat aus Glas, erhalten durch Polymerisation von Diethylenglycol-bis(allylcarbonat);
(b) einen abriebfesten Überzug, erhalten durch Härten einer Zusammensetzung, enthaltend in Methanol kolloidales Siliciumdioxid und ein Hydrolysat von γ-Glycidyloxypropylmethyldiethoxysilan;
(c) eine Stoßschutzzwischenschicht, erhalten durch Härten einer Zusammensetzung, enthaltend 4,4'-Dicyclohexylmethandiisocyanat und Polyethylenglycol;
(d) einen mehrschichtigen Antireflexionsüberzug.

**18.** Verfahren zur Herstellung einer Augenkorrekturlinse, wie sie gemäß einem der Ansprüche 1 bis 17 definiert ist, dadurch gekennzeichnet, daß auf der Oberfläche des Substrats aus organischem Glas der abriebfeste Überzug aufgebracht wird, daß auf der abriebfesten Schicht die Stoßschutzprimärschicht aufgebracht wird, worauf auf der

Stoßschutzprimärschicht der Antireflexionsüberzug aufgebracht wird.

**19.** Verfahren nach Anspruch 18, dadurch gekennzeichnet, daß die abriebfeste Schicht und die Stoßschutzprimärschicht durch Zentrifugieren, durch Tauchen oder durch Pulverbeschichten aufgebracht werden und daß der Antireflexionsüberzug durch Vakuumabscheidung aufgebracht wird.

**20.** Verfahren nach Anspruch 18 oder 19, dadurch gekennzeichnet, daß die abriebfeste Schicht und die Stoßschutzprimärschicht durch eine chemische oder physikalische Aktivierungsbehandlung der Oberfläche vorbehandelt werden.

**21.** Verfahren nach Anspruch 20, dadurch gekennzeichnet, daß die Aktivierungsbehandlung der Oberfläche ein alkalischer, chemischer Angriff, eine Behandlung mit Sauerstoffplasma oder ein Ionenbeschuß unter Vakuumeinschluß ist.

## Claims

**1.** Ophthalmic lens consisting of a substrate made of organic glass, of an abrasion-resistant coating, of a layer of impact-resistant primer and of an anti-reflective coating, characterized in that the surface of the said substrate is covered with the abrasion-resistant coating and in that the impact-resistant primer layer is inserted between the said abrasion-resistant layer and the anti-reflective coating.

**2.** Lens according to Claim 1, characterized in that the substrate is chosen from:

(I) the glasses obtained by polymerization of diethylene glycol bis(allyl carbonate);
(II) the glasses obtained by polymerization of acrylic monomers derived from bisphenol A;
(III) the glasses obtained by polymerization of allyl monomers derived from bisphenol A.

**3.** Lens according to Claim 1, characterized in that the substrate is chosen from:

(A) the glasses obtained from poly(methyl methacrylate);
(B) the glasses obtained from polystyrene resin;
(C) the glasses made of resin based on diallyl phthalate;

**4.** Lens according to any one of Claims 1 to 3, characterized in that the impact-resistant interlayer has an intrinsic Bayer value lower than or equal to 2, at a thickness of 3 µm.

**5.** Lens according to any one of Claims 1 to 4, characterized in that the impact-resistant primer is a thermoplastic or heat-curable polymer composition which has a solids content of between 5 and 20% by weight relative to the total weight of the primer composition.

**6.** Lens according to any one of Claims 1 to 5, characterized in that the thickness of the impact-resistant interlayer in the cured state is between 0.2 and 1 µm.

**7.** Lens according to any one of Claims 1 to 6, characterized in that the composition of the impact-resistant primer consists of a thermoplastic polyurethane resin obtained by reaction of a diisocyanate with a compound comprising a reactive hydrogen at each end.

**8.** Lens according to any one of Claims 1 to 6, characterized in that the composition of the impact-resistant primer consists of a heat-curable polyurethane resin obtained by reaction of a blocked polyisocyanate and of a polyol.

**9.** Lens according to any one of Claims 1 to 6, characterized in that the composition of the impact-resistant primer consists of a copolymer of acrylic and/or methacrylic monomers and of aromatic vinyl compounds.

**10.** Lens according to any one of Claims 1 to 6, characterized in that the composition of the impact-resistant primer consists of a polysiloxane.

**11.** Lens according to Claim 10, characterized in that the composition of the impact-resistant primer contains, in a

solvent medium, one or a number of silane hydrolysate(s) with an epoxy group containing at least one Si-alkyl group and containing no fillers.

**12.** Lens according to any one of Claims 1 to 11, characterized in that the hard abrasion-resistant coating is obtained by curing a composition containing:

a) colloidal silica which has a mean particle diameter of between 1 and 100 nm;
b) a solvent;
c) a hydrolysate or a mixture of hydrolysates of silane compound(s) of formula:

$$R^1 - \overset{\displaystyle R^3a}{\overset{|}{Si}} - (OR^2)_{3-a} \qquad (\alpha)$$

in which:

$R^1$ denotes an organic group containing an epoxy group;
$R^2$ is a hydrocarbon radical which has 0 or 1 carbon atom;
$R^3$ is a hydrocarbon group which has from 1 to 4 carbon atoms, and a is 0 or 1 in value.

**13.** Lens according to any one of Claims 1 to 12, characterized in that the thickness of the abrasion-resistant layer, in the cured state, is between 1 and 15 μm.

**14.** Lens according to Claim 12 or 13, characterized in that the composition of the abrasive-resistant coating has a colloidal silica content of between 0 and 40% by weight in the solids content.

**15.** Lens according to any one of Claims 1 to 14, characterized in that the anti-reflective coating consists of a mono- or multilayer film based on dielectric materials and deposited by vacuum deposition.

**16.** Lens according to any one of Claims 1 to 15, characterized in that it successively includes:

a) a substrate made of glass obtained by polymerization of diethylene glycol bis(allyl carbonate);
b) a hard abrasion-resistant coating obtained by curing a composition containing, in methanol, colloidal silica and a hydrolysate of γ-glycidyloxypropylmethyldiethoxysilane;
c) an impact-resistant interlayer obtained by curing a composition containing, in methanol, a hydrolysate of γ-glycidyloxypropylmethyldiethoxysilane or of γ-glycidoxypropyltrimethoxysilane;
d) a multilayer anti-reflective coating.

**17.** Lens according to any one of Claims 1 to 15, characterized in that it successively includes:

a) a substrate made of glass obtained by polymerization of diethylene glycol bis(allyl carbonate);
b) an abrasion-resistant coating obtained by curing a composition containing, in methanol, colloidal silica and a hydrolysate of γ-glycidoxypropylmethyldiethoxysilane;
c) an impact-resistant interlayer obtained by curing a composition containing 4,4 -dicyclohexylmethane diisocyanate and polyethylene glycol;
d) a multilayer anti-reflective coating.

**18.** Process for the manufacture of an ophthalmic lens as defined according to any one of Claims 1 to 17, characterized in that the abrasion-resistant coating is applied onto the surface of the organic glass substrate, in that the layer of impact-resistant primer is deposited onto the abrasion-resistant layer and in that the anti-reflective coating is then deposited onto the impact-resistant primer.

**19.** Process according to Claim 18, characterized in that the abrasion-resistant layer and the layer of impact-resistant primer are deposited by centrifuging, by dipping or by spraying and in that the anti-reflection is applied by vacuum deposition.

20. Process according to Claim 18 or 19, characterized in that the abrasion-resistant and impact-resistant primer layers are pretreated using a surface activation treatment by a chemical or physical route.

21. Process according to Claim 20, characterized in that the surface activation treatment is an alkaline chemical etching, an oxygen plasma treatment or an ion bombardment in a vacuum vessel.